# EUROPÄISCHE PATENTSCHRIFT

(11) **EP 2 475 740 B1**
(45) Veröffentlichungstag und Bekanntmachung des Hinweises auf die Patenterteilung: **15.04.2015**
(21) Anmeldenummer: 10751927.4
(22) Anmeldetag: 06.09.2010
(51) Int. Cl.: C09K 11/78, C09K 11/84, C09K 11/86

(54) **GEMENGE, LUMINESZIERENDE ZUSAMMENSETZUNG, HERSTELLUNGSVERFAHREN UND VERWENDUNG**
MIXTURE, LUMINESCENT COMPOSITION, PRODUCTION METHOD, AND USE
MÉLANGES, COMPOSITION LUMINESCENTE, PROCÉDÉ DE FABRICATION ET UTILISATION

(30) Priorität: 11.09.2009 DE 102009029395
(43) Veröffentlichungstag der Anmeldung: 18.07.2012
(73) Patentinhaber: G.I.P.C. Holdings Ltd., 67134 Tel Aviv (IL)
(72) Erfinder: HARMIA, Tapio, 67659 Kaiserslautern (DE)
(74) Vertreter: WSL Patentanwälte Partnerschaft mbB
(86) Internationale Anmeldenummer: PCT/EP2010/063048
(87) Internationale Veröffentlichungsnummer: WO 2011/029796

(56) Entgegenhaltungen:
- EP-A2- 2 038 371
- WO-A2-2008/132223
- DE-A1- 2 629 413
- GB-A- 2 258 659

## Beschreibung

Die vorliegende Erfindung betrifft die Verwendung eines Gemenges aus mindestens einer lumineszierenden Zusammensetzung und mindestens einer im Wesentlichen nicht lumineszierenden Substanz, wobei die lumineszierende Zusammensetzung einen Mischkristall von anorganischen Salzen umfasst und die mindestens eine im Wesentlichen nicht lumineszierende Substanz ein anorganisches Salz oder ein Mischkristall aus anorganischen Salzen ist, zur Markierung von Gegenständen, Stoffen oder Stoffgemischen, wobei das Gemenge auf den Gegenstand, den Stoff oder das Stoffgemisch aufgebracht oder in ihn/es eingebracht wird, wobei vorzugsweise das Gemenge oder die Zusammensetzung als Mischung oder als Muster auf den Gegenstand, den Stoff oder das Stoffgemisch aufgebracht oder in ihn/es eingebracht wird und mit Gemengen markierte Gegenstände, Stoffe und Stoffgemische..

Es ist bekannt, dass Substanzen, die Lanthanoidionen in der Oxidationsstufe +3 enthalten, insbesondere Lanthanoidoxidsulfide lumineszieren, wobei bei Anregung mit Strahlung im Infrarotbereich kurzwelliges Licht, z.B. im sichtbaren Bereich und/oder im UV-Bereich, emittiert wird. Diese Substanzen oder solche Substanzen enthaltenden Zusammensetzungen weisen charakteristische Emissionsspektren auf, die mit einem an das Emissionsspektrum angepassten Auslesesystem nachgewiesen werden können. Aus diesem Grund werden z.B. Lanthanoidoxidsulfide und diese enthaltende Zusammensetzungen als Fälschungssicherung für die Markierung von Gegenständen, Stoffen oder Stoffgemischen eingesetzt.

Es hat sich jedoch gezeigt, dass es je nach Verwendung der Fälschungssicherung notwendig ist, große Mengen an Markierungssubstanz oder Markierungszusammensetzung einzusetzen. Weiterhin besteht dabei die Problematik, dass die Markierungssubstanz bzw. -zusammensetzung von Fälschern chemisch analysiert und ebenfalls nachgeahmt werden kann.

Die DE 26 29 413 betrifft eine Fluoreszenzmasse, die durch Elektronen mit einer niedrigen Geschwindigkeit angeregt werden, insbesondere Fluoreszenzmassen mit einer hohen Lichtstärke, und ihre Verwendung in einer Fluoreszenz-Anzeigevorrichtung, die einen Fluoreszenzschirm mit einer solchen Fluoreszenzmasse aufweist, wobei die Fluoreszenzmasse Indiumoxid und einen Leuchtstoff aufweist, der aus einer Gruppe von Leuchtstoffen ausgewählt ist, die mit Terbium, Kupfer und Aluminium, Europium, Cer, Mangan oder Silber aktivierte Sulfide, Gallate, Silikate und Oxide enthält.

Die WO 2008/000461 offenbart eine lumineszierende Zusammensetzung auf Basis von Yttriumoxidsulfid und weiteren Oxidsulfiden, der mindestens ein Dotierstoff zugesetzt ist.

Die GB 2 258 659 A betriff ein lumineszierendes Anti-Stokes-Material, das dotiertes Yttriumoxidsulfid umfasst, wobei die Dotierstoffe 4 bis 50 Gew.-% Oxidsulfid von sowohl Erbium als auch Ytterbium umfassen. Das Material kann 1 bis 50 ppm eines oder mehrerer Lanthanide umfassen und Erbium und Ytterbium können durch Thulium, Holmium oder Lutetium ersetzt werden.

Der vorliegenden Erfindung liegt daher die Aufgabe zugrunde, Gemenge oder Zusammensetzungen bereitzustellen, die in geringen Mengen zur Markierung von Gegenständen, Stoffen und Substanzen eingesetzt werden können, wobei deren Analyse und Nachahmbarkeit erschwert ist.

Diese Aufgabe wird durch die Verwendung eines Gemenges der eingangs genannten Artgelöst, bei dem die mindestens eine im Wesentlichen nicht lumineszierende Substanz ausgewählt ist unter Oxiden, Sulfiden, Fluoriden, Oxidsulfiden, Oxidfluoriden und Oxidsulfidfluoriden von Yttrium, Lanthan, Holmium, Erbium, Thulium, Ytterbium, Calcium, Zink und Titan.

Unter Gemenge versteht man hier eine mechanische Mischung aus mindestens zwei Substanzen, die jeweils als Feststoff vorliegen.

Unter Mischkristall wird vorliegend ein Kristall verstanden, bei dem verschiedene Salze gemeinsam in einem Kristall enthalten sind, wobei die Salze zwei oder mehrere verschiedene Kationen und zwei oder mehrere verschiedene Anionen umfassen können. Bevorzugt besteht der Mischkristall, der von der mindestens einen lumineszierenden Zusammensetzung umfasst ist, aus verschiedenen Kationen, aber nur einem einzigen Anion.

Unter einer im Wesentlichen nicht lumineszierenden Substanz versteht man dabei eine Substanz, die keine Lumineszenz aufweist, bzw. deren Lumineszenz so gering ist, dass ihre Lumineszenz das Lumineszenzspektrum der lumineszierenden Substanz nicht messbar überlagert.

Besonders bevorzugt handelt es sich bei der Lumineszenz um eine Upconversion-Lumineszenz, die durch Licht- bzw. Photoneneinstrahlung im IR-Bereich ausgelöst wird.

Es hat sich dabei gezeigt, dass die Zugabe mindestens eines im Wesentlichen nicht lumineszierenden anorganischen Salzes, oder Mischkristalls die Lumineszenz des optisch aktiven Mischkristalls oder der optisch aktiven Mischkristalle nicht beeinflusst. Es ist bei derartigen Gemengen basierend auf einer Elementaranalyse nicht möglich, festzustellen, welche Bestandteile für die Lumineszenz und damit für das charakteristische Spektrum verantwortlich sind.

Das anorganische Salz, bzw. das Mischkristall der mindestens einen im Wesentlichen nicht lumineszierenden Substanz kann aus identischen, teilweise identischen oder verschiedenen Elementen aufgebaut sein, im Vergleich zu den anorganischen Salzen, die in dem Mischkristall der lumineszierenden Zusammensetzung enthalten sind. Das charakteristische Lumineszensspektums eines lumineszierenden Mischkristalls wird auch durch die Menge der einzelnen enthaltenen Salze beeinflusst. Daher ist es möglich, dass bereits die Zugabe eines oder mehrerer nicht lumineszierender Salze, aus denen der Mischkristall der lumineszierenden Zusammensetzung besteht, eine Analyse und Nachahmung des Gemenges erschwert oder unmöglich macht.

Beispiele für lumineszierende und im Wesentlichen nicht lumineszierende Substanzen bzw. derartige Mischkristalle sind zahlreich im Stand der Technik bekannt.

Bevorzugt beträgt die maximale Lumineszenzintensität, die eine nicht lumineszierende Substanz bei einer gegebenen Anregungswellenlänge oder Anregungswellenlängenbereich und -leistung aufweist, im Vergleich zu der lumineszierenden Zusammensetzung unter gleichen Bedingungen und bei gleicher Menge (z.B. Masse) weniger als 1/100 der maximalen Lumineszenzintensität der lumineszierenden Zusammensetzung bei einer gegebenen Lumineszenzwellenlänge oder in einem gegebenen Bereich von Lumineszenzwellenlängen. Der Bereich von Lumineszenzwellenlängen entspricht dabei dem Bereich, in dem ein Auslesesystem die Emission, d.h. die Lumineszenz analysiert.

Bei bestimmten Ausführungsformen kann die Anregungswellenlänge im Bereich zwischen 850 und 1500 nm, vorzugsweise zwischen etwa 920 und 1000 nm, besonders bevorzugt zwischen etwa 950 und 1000 nm, am meisten bevorzugt zwischen 975 und 985 nm liegen und die Lumineszenzwellenlängen im Bereich zwischen 300 nm und 1700 nm liegen. Bevorzugt erfolgt die Bestrahlung für das Feststellen des Vorliegens einer lumineszierenden Zusammensetzung bzw. einer im Wesentlichen nicht lumineszierenden Substanz bei Anregungsleistungen von 1 bis 200 mW, insbesondere 10 bis 80 mW.

Besonders bevorzugt beträgt das Verhältnis der mindestens einen nicht lumineszierenden Substanz zu der mindestens einen lumineszierenden Zusammensetzung zwischen 1/100 und 100/1, bevorzugt zwischen 1/50 und 1/1.

Bevorzugt umfasst die mindestens eine lumineszierende Zusammensetzung einen Mischkristall aus mindestens zwei Salzen, besonders bevorzugt mindestens drei Salzen, die ausgewählt sind aus der Gruppe, bestehend aus Oxiden, Oxidsulfiden, Oxidfluoriden oder Oxidsulfidfluoriden von Yttrium, Lanthan, Cer, Praseodym, Neodym, Samarium, Europium, Gadolinium, Terbium, Dysprosium, Holmium, Erbium, Thulium, Ytterbium und Lutetium, wobei mindestens ein Salz Lanthan und/oder Yttrium enthält.

Beispiele für lumineszierende Zusammensetzungen sind unter anderem offenbart in US 6,802,992, nämlich rot lumineszierende Mischkristalle, zu denen beispielsweise Yttrium-Erbium-Ytterbium-Oxidsulfid, Gadolinium-Erbium-Ytterbium-Oxidsulfid sowie einige andere Mischkristalle gehören.

Auch der EP 2038371 sind Beispiele für lumineszierende Mischkristalle und deren Herstellung zu entnehmen.

Im Wesentlichen nicht lumineszierende Substanzen, die aus teilweise identischen Elementen wie die lumineszierenden Mischkristalle bestehen, sind beispielsweise Ytterbiumoxid oder Gadoliniumoxid. Weitere Beispiele für nicht lumineszierende Mischkristalle sind u.a. ein Lanthanoxidfluorid, das 1 % Yb, 1,5 % Er und 0,5 % Dy enthält, ein Yttriumoxidfluorid, das 2 % Yb, 1 % Er, 0,5 % Pr, 0,5 % Tb enthält, oder ein Yttriumoxid, das 10 % Yb, 2 % Er, 0,5 % SM und 0,1 % Fe enthält.

Lanthanoidmischkristalle weisen in der Regel eine messbare Lumineszenz auf, die jedoch u.a. je nach Stöchiometrie und Herstellungsbedingungen unterschiedlich sein kann und nicht oder nur schwer vorhersehbar ist. Der Fachmann kann anhand von ihm bekannten Messmethoden einfach lumineszierende Zusammensetzungen von im Wesentlichen nicht lumineszierenden Substanzen unterscheiden.

Der Mischkristall der mindestens einen lumineszierenden Zusammensetzung kann aus einer einzigen kristallinen Phase bestehen, gemäß anderen Ausführungsformen kann der Mischkristall der mindestens einen lumineszierenden Zusammensetzung jedoch auch Kristalle aus mehreren Phasen, z. B. zwei Phasen, aufweisen. Innerhalb des Mischkristalls der mindestens einen lumineszierenden Zusammensetzung können auch Gradienten der stöchiometrischen Zusammensetzung auftreten.

Es handelt sich dabei um lumineszierende Mischkristalle, mit "Upconverter"- und/oder "Antistokes"-Eigenschaften. Die Lumineszens kann darauf zurückgeführt werden, dass Elektronen der 4f-Schale von Lanthanoidionen bei Bestrahlung durch sequentielle Mehrfachanregung in einen Energiezustand angehoben werden, der ein gegenüber der Absorption eines einzigen Photons erhöhtes Niveau aufweist. Aus diesem Energiezustand kann bei Relaxation ein energiereicheres Photon als das ursprünglich absorbierte Photon emittiert werden.

Der Mischkristall der mindestens einen lumineszierenden Zusammensetzung kann in gröberen, kristallinen Partikeln oder fein vermahlen vorliegen.

Neben einem Yttrium- und/oder Lanthansalz kann der Mischkristall der mindestens einen lumineszierenden Zusammensetzung gemäß bevorzugten Ausführungsformen aus einem bzw. zwei oder mehreren weiteren Salzen bestehen.

In dem Mischkristall der mindestens einen lumineszierenden Zusammensetzung liegt bzw. liegen das/die Lanthan und/oder Yttrium enthaltende(n) Salz bzw. Salze bezogen auf den Mischkristall bevorzugt in einem Anteil von ≥ 50 Mol-%, ≥ 75 Mol-% und besonders bevorzugt ≥ 85 Mol-% vor. Das weitere oder die weiteren enthaltenen Salze können vorzugsweise in Anteilen von ≤ 30 Mol-%, bevorzugt 1 bis 20 Mol-% und besonders bevorzugt 2 bis 15 Mol-% bezogen auf den Mischkristall vorliegen.

Bevorzugt sind dabei das bzw. die nicht Lanthan und/oder Yttrium enthaltende(n) Salz bzw. Salze ausgewählt aus Ytterbium und mindestens einem Element ausgewählt unter Erbium, Holmium und Thulium. Aus dieses Salzen aufgebaute Mischkristalle der mindestens einen lumineszierenden Zusammensetzung weisen besonders charakteristische und intensive Lumineszenzen auf.

Weiterhin bevorzugt besteht die mindestens eine lumineszierende Zusammensetzung aus einem Mischkristall aus anorganischen Salzen, der mit mindestens einem Dotierstoff dotiert ist. Der Dotierstoff bewirkt dabei eine Veränderung des charakteristischen Emissionsspektrums der lumineszierenden Zusammensetzung. Durch Zugabe eines oder mehrerer unterschiedlicher Dotierstoffe in verschiedenen Mengen können daher unterschiedliche Spektren der lumineszierenden Zusammensetzung erhalten werden.

Gemäß einer besonders bevorzugten Ausführungsform ist der Dotierstoff ausgewählt aus der Gruppe bestehend aus Oxiden und Fluoriden von Haupt- und Nebengruppenelementen. Selbstverständlich handelt es sich dabei nur um solche Elemente, die mit Sauerstoff und/oder Fluor ein Oxid bzw. Fluorid bilden können. Dies sind bevorzugt die Elemente der 1. bis 6. Hauptgruppe (IA bis VIA) und die Nebengruppenelemente (Gruppen IIIB, IVB, VB, VIB, VIIB, VIII, IB, IIB), einschließlich Lanthanoide. Aus Gründen der Handhabbarkeit werden bevorzugt keine Oxide und Fluoride von Elementen bzw. Isotopen verwendet, die dem radioaktiven Zerfall unterliegen, z.B. von Elementen mit einer Ordnungszahl von 84 und mehr.

Vorzugsweise sind die Dotierstoffe ausgewählt unter Oxiden und Fluoriden von Alkali-, Erdalkalimetallen und Nebengruppenelementen. Bevorzugt sind Dotierstoffe Oxide und Fluoride von Calcium, Zink und Titan, beispielsweise in Form der Oxide Calciumoxid, Zinkoxid bzw. Titandioxid.

Diese Dotierstoffe liegend vorzugsweise in einem Anteil von jeweils ≤ 30 Mol-%, bevorzugt ≤ 10 Mol-% und besonders bevorzugt von ≤5 Mol-% bezogen auf die Zusammensetzung aus Mischkristall und Dotierstoff vor.

Durch die im Wesentlichen nicht lumineszierende Substanz werden Elemente in das Gemenge eingebracht, die generell geeignet sind, in lumineszierenden Mischkristallen mit guten Lumineszenzeigenschaften enthalten zu sein.

Gemäß einer bevorzugten Ausführungsform der Erfindung sind in dem Gemenge mindestens zwei, bevorzugt genau drei, lumineszierende Zusammensetzungen enthalten. Derartige Gemenge weisen ein hinreichend komplexes Lumineszenzschema auf, um eine Analyse der enthaltenen Mischkristalle zu erschweren bzw. annähernd unmöglich zu machen. Weiter ergeben sich insbesondere durch ein drei lumineszierenden Zusammensetzungen umfassendes Gemenge große Möglichkeiten an Variationen bezüglich des Lumineszenzspektrums, so dass eine fast beliebige Anzahl an verschiedenen, analysierbaren Lumineszenzspektren erzeugt werden kann. Gleichzeitig ist die Unterscheidbarkeit von verschiedenen Spektren bei Gemengen mit genau drei lumineszierenden Zusammensetzungen besonders gut.

Ein Verfahren zur Herstellung einer lumineszierenden Zusammensetzung umfasst die folgenden Stufen:
i) Mischen und Homogenisieren eines pulverförmigen Gemisches, welches folgende Bestandteile umfasst:
   (a) mindestens drei Komponenten ausgewählt aus der Gruppe, bestehend aus Oxiden, Sulfiden, Fluoriden, Oxidsulfiden, Oxidfluoriden und Oxidsulfidfluoriden von Yttrium, Lanthan, Cer, Praseodym, Neodym, Samarium, Europium, Gadolinium, Terbium, Dysprosium, Holmium, Erbium, Thulium, Ytterbium und Lutetium, oder entsprechende Verbindungen, die sich durch Erhitzen in Oxide, Sulfide oder Fluoride umwandeln,
      wobei mindestens eine Komponente Lanthan und/oder Yttrium enthält,
   (b) mindestens einen Dotierstoff, ausgewählt unter Oxiden und/oder Fluoriden von Haupt- oder Nebengruppenelementen,
ii) Zugeben einer Mischung aus Fluorid und einem Alkalicarbonat zu dem Gemisch aus Stufe i) und Vermengen und/oder Homogenisieren mit dem Gemisch aus Stufe i) unter erhalt eines Gemisches,
iii) Erhitzen des erhaltenen Gemisches aus Stufe ii) für 2 h bis 30 h auf eine Temperatur von mehr als 600 °C,
iv) Abkühlen des erhitzten Gemisches aus Stufe iii) unter Erhalt einer festen Masse einer lumineszierenden Zusammensetzung.

Unter Gemisch in Stufe i) und Stufe ii) versteht man eine Kombination aus festen Substanzen, die miteinander vermengt werden. Es handelt sich um die Ausgangssubstanzen sowie Hilfssubstanzen, die für die Herstellung einer lumineszierenden Zusammensetzung eingesetzt werden.

Durch die Zugabe des Fluorids in Stufe ii) können lumineszierende Zusammensetzungen hergestellt werden, die einen Mischkristall mit einer Dotierung enthalten. Diese Zusammensetzungen weisen im Vergleich zu mit herkömmlichen Verfahren hergestellten lumineszierenden Zusammensetzungen eine erhöhte Lumineszenzintensität auf. Weiter ist die thermische Stabilität dieser Zusammensetzung im Vergleich zu mit herkömmlichen Verfahren hergestellten lumineszierenden Zusammensetzungen erhöht.

Für den Dotierstoff versteht es sich, dass es sich nur um Oxide und/oder Fluoride solcher Elemente handelt, die in der Lage sind, mit Sauerstoff und/oder Fluor ein Oxid bzw. Fluorid zu bilden. Bevorzugt sind die Elemente der 1. bis 6. Hauptgruppe (Gruppe IA bis VIA) und die Nebengruppenelemente (Gruppen IIIB, IVB, VB, VIB, VIIB, VIII, IB, IIB), einschließlich Lanthanoide. Besonders bevorzugt sind Alkalimetalle und Erdalkalimetalle, sowie Nebengruppenelemente, insbesondere Calcium, Zink und Titan.

In einer Ausführungsform umfasst das Verfahren weiter folgende Stufen:
v) Zerkleinern der in Stufe iv) erhaltenen festen Masse, unter Erhalt eines Pulvers,
vi) Waschen des Pulvers aus Stufe v) in Wasser und
vii) Abzentrifugieren und/oder Filtern des Pulvers, unter Erhalt eines Niederschlag oder Rückstands, und
viii) optional weiter Zerkleinern des Niederschlags oder Rückstands aus Stufe vii) bis zum Erhalt der gewünschten mittleren oder maximalen Partikelgröße.

Es werden dadurch besonders reine Zusammensetzungen erhalten, die eine definierte Partikelgrößenverteilung aufweisen. Dies ist insbesondere bei der Verwendung solcher Zusammensetzungen im Zusammenhang mit weiteren lumineszierenden Zusammensetzungen wichtig, da auch die Partikelgrößenverteilung und die mittlere und maximale Partikelgröße einen Einfluss auf das Lumineszenzspektrum der so hergestellten Zusammensetzung haben.

Bevorzugt wird in einer weiteren Stufe des Verfahrens zu der lumineszierende Zusammensetzung mindestens eine im Wesentlichen nicht lumineszierende Substanz und optional eine oder mehrere weitere lumineszierende Zusammensetzungen hinzugefügt und vermischt, unter Erhalt eines Gemenges.

In einer Ausführungsform wird das Fluorid in Stufe ii) in einer Menge von 10 Masse-% bis 60 Masse-%, bevorzugt 25 Masse-% bis 30 Masse-% bezogen auf das gesamte Gemisch in Stufe ii) eingesetzt.

Es hat sich dabei überraschenderweise gezeigt, dass trotz der großen eingesetzten Menge an Fluorid, dieses nicht in den Mischkristall eingebaut wird und dadurch die Stöchiometrie des entstehenden Mischkristalls nicht verändert wird. Diese große Menge an Fluorid führt jedoch zu einer Erhöhung der Lumineszenzintensität um das bis zu 5- bis 7-fache, im Vergleich zu geringeren eingesetzten Mengen.

Bevorzugt wird die Mischung aus Fluorid und Alkalicarbonat in Stufe ii) zusammen mit elementarem Schwefel zugesetzt.

Der Anteil des Fluorids an der zugesetzten Mischung in Stufe ii) beträgt bevorzugt 5 Masse-% bis 70 Masse-%, bevorzugt 25 Masse-% bis 70 Masse-%, besonders bevorzugt zwischen 33 Masse-% und 40 Masse-%, bezogen auf die Mischung aus Alkalicarbonat, elementarem Schwefel und Fluorid.

Durch Variation der Verhältnisse von Alkalicarbonat und Fluorid und ggf. elementarem Schwefel zueinander, sowie des Sauerstoffpartialdrucks bei dem Erhitzen in Stufe iii) können die Stöchiometrien der entstehenden lumineszierenden Zusammensetzungen beeinflusst werden.

Bevorzugt wird als Fluorid in Stufe ii) ein Alkali- oder Erdalkalifluorid zugesetzt.

Das Fluorid ist bevorzugt Kaliumfluorid. Das Alkalicarbonat ist bevorzugt Natriumcarbonat.

Durch das Verfahren wird eine lumineszierende Zusammensetzung erhalten. Diese Zusammensetzung weist ähnliche oder identische Stöchiometrien zu mit herkömmlichen Verfahren erhaltenen lumineszierenden Zusammensetzungen auf. Überraschenderweise ist jedoch die Lumineszenzintensität im Vergleich zu mit herkömmlichen Verfahren hergestellten lumineszierenden Zusammensetzungen um das 5- bis 7-fache erhöht. Weiter weisen so hergestellte lumineszierende Zusammensetzungen eine erhöhte thermische Stabilität auf. Es wird angenommen, dass durch das in dem Verfahren zugesetzte Fluorid möglicherweise eine homogenere Verteilung der atomaren Bausteine und damit ein homogenerer Kristall entsteht, im Vergleich zu herkömmlichen Herstellungsverfahren.

Die so erhaltenen lumineszierenden Zusammensetzungen können im Vergleich zu herkömmlichen Zusammensetzungen in geringeren Mengen für die Markierung von Gegenständen, Stoffen und Stoffgemischen eingesetzt werden, so dass eine Analyse der Markierungszusammensetzung durch die geringe vorhandene Menge erschwert ist.

Unterschiedliche Stöchiometrien des entstehenden Mischkristalls können bei dem Verfahren u.a. durch die Veränderung der Temperatur in Stufe ii) erzeugt werden.

Erfindungsgemäß wird weiter eine lumineszierende Zusammensetzung mit der allgemeinen Formel (I) verwendet:

G_{q}L_{1-q} (I),

wobei
q eine Zahl zwischen 0 und 1 ist, bevorzugt zwischen 0,8 und 1, besonders bevorzugt zwischen 0,9 und 1, ist, und
G die folgende Formel (II) aufweist:

Y₂₋ₓLaₓO_{3-y-z}S_{y}F_{2z} (II),

wobei
x = 0 bis 2,
y = 0 bis 1, bevorzugt y ∼ 0 oder ∼ 1,
z = 0 bis 0,25, bevorzugt z = 0,001 bis 0,1, ist,
und
L ausgewählt ist unter zwei oder mehreren Komponenten der folgenden Formel (III):

M'_{c}M"_{2-c}O_{3-a-b}SₐF_{2b} (III),

wobei
c = 0 bis 2,
a = 0 bis 1, bevorzugt a ∼ 0 oder ∼ 1,
b = 0 bis 0,25, bevorzugt b = 0,001 bis 0,1, ist
   und
M' und M" jeweils unabhängig voneinander ausgewählt sind, aus der Gruppe bestehend aus den dreiwertigen Kationen von Cer, Praseodym, Neodym, Samarium, Europium, Gadolinium, Terbium, Dysprosium, Holmium, Erbium, Thulium, Ytterbium und Lutetium, wobei für jede Komponente in L die Variablen M' und M" für unterschiedliche dreiwertige Kationen stehen,
wobei in der Zusammensetzung a = y und b = z ist.

Beispielsweise kann die Zusammensetzung gemäß Formel (I) neben Yttrium und/oder Lanthan noch zwei, drei, vier, fünf, sechs, sieben oder noch weitere Elemente M enthalten. Maximal sind 13 verschiedene dreiwertige Kationen M enthalten. Beispielsweise beinhaltet eine Zusammensetzung Lanthan- und Yttriumoxid, Holmium-, Erbium- und Thuliumoxid.

In einer Ausführungsform ist die Zusammensetzung ein Oxidfluorid, wobei y und a in der Formel (I) beide 0 sind. In einer weiteren Ausführungsform sind z und b in der oben angegebenen Formel (I) beide 0. In noch einer weiteren Ausführungsform ist die Zusammensetzung ein Oxidsulfidfluorid, wobei in der Zusammensetzung gemäß der obigen Formel (I) y und a und z und b von 0 verschieden sind. In noch einer weiteren Ausführungsform ist die Zusammensetzung ein Oxid, wobei in Formel (I) y, a, z und b 0 sind.

Bevorzugt ist dabei ebenfalls, dass wenn y oder a nicht 0 sind, z oder b ebenfalls nicht 0 sind. Weiterhin bevorzugt ist y entweder 0 oder 1 und a entweder 0 oder 1.

Besonders bevorzugt ist die lumineszierende Zusammensetzung gemäß der oben angegebenen allgemeinen Formel (I) durch ein oben beschriebenes Verfahren hergestellt.

Die lumineszierende Zusammensetzung liegt üblicherweise in Partikeln vor. Vorzugsweise liegt die mittlere Partikelgröße im Bereich von 1 nm bis 300 µm, besonders bevorzugt im Bereich von 1 µm bis 45 µm.

Es hat sich dabei gezeigt, dass diese Partikelgröße für eine große Anzahl an Anwendungen, beispielsweise in Druckverfahren oder zur Markierung von Webfäden, etc. besonders geeignet ist. Weiterhin handelt es sich dabei um eine Partikelgröße, die gut reproduzierbar ist. Es hat sich herausgestellt, dass bei derartigen lumineszierenden Zusammensetzungen das Lumineszenzspektrum auch von der Partikelgröße bzw. der Partikelgrößenverteilung abhängt. Aus diesem Grund ist die gute Reproduzierbarkeit in dem Bereich einer mittleren Partikelgröße von 1 µm bis 45 µm vorteilhaft.

Die lumineszierenden Zusammensetzungen sind Lumineszenzstoff mit Upconverter"- und/oder "Antistokes"-Eigenschaften. Sie liegen vorzugsweise in kristalliner Form, d.h. als Mischkristall, vor. Weiterhin bevorzugt ist, dass die Zusammensetzung aus einer einzigen Phase, beispielsweise einer kristallinen Phase, besteht, die durch röntgendiffraktometrische Methoden bestimmt werden kann. In bestimmten Ausführungsformen kann die Zusammensetzung auch aus mehreren Phasen, z. B. zwei Phasen, bestehen. Innerhalb des Mischkristalls können auch Gradienten der stöchiometrischen Zusammensetzung auftreten.

Gemäß einer besonders bevorzugten Ausführungsform der Erfindung enthält ein Gemenge, welches zur Markierung von Gegenständen oder Stoffen oder Stoffgemischen verwendet werden kann, mindestens eine lumineszierende Zusammensetzung, die durch das oben beschriebene Verfahren hergestellt ist und/oder die oben beschriebene Stöchiometrie aufweist.

Bevorzugt sind alle in einem Gemenge enthaltenen lumineszierenden Zusammensetzungen Zusammensetzungen, die besonders bevorzugt durch das Verfahren hergestellt sind.

Die Gemenge werden zur Markierung von Gegenständen, Stoffen oder Stoffgemischen eingesetzt, wobei die Zusammensetzung auf den Gegenstand, den Stoff oder das Stoffgemisch aufgebracht wird, oder in ihn/es eingebracht wird.

Gemäß einer weiteren bevorzugten Ausführungsform der Erfindung wird das Gemenge als Mischung oder als Muster auf den Gegenstand, den Stoff oder das Stoffgemisch aufgebracht oder in ihn/es eingebracht.

Erfindungemäß sind ebenfalls Gegenstände, Stoffe oder Stoffgemische, die mit einem Gemenge markiert sind.

Die Lumineszenzstoffe können als Nachweis- und Markierungsstoffe, beispielsweise als Sicherheitsmarkierungen von Gegenständen, Stoffen oder Stoffgemischen, verwendet werden. Auf diese Weise kann die Echtheit von Gegenständen, beispielsweise von Produkten oder Dokumenten, bestimmt werden. Der Lumineszenzstoff kann, da er chemisch inert ist, in beliebige feste und/oder flüssige Stoffe oder Stoffgemische eingebracht oder darauf aufgebracht werden. Beispielsweise kann der Lumineszenzstoff in Trägersubstanzen, wie etwa Lacke, Toner, Tinten, Farben etc., oder in Produkte, wie Kunststoffe, Metalle, Glas, Silikone, Papier, Gummi etc., aufgebracht bzw. in diese eingebracht werden. Auch zum Einsatz in biologischen Systemen, z.B. Zellkulturen, Proben aus Körperflüssigkeiten bzw. Gewebeschnitten oder als Kontrastmittel, ist der Lumineszenzstoff geeignet. Dabei kann der Lumineszenzstoff in nano- oder mikropartikulärer Form an biologische Nachweisreagenzien gekoppelt werden. Weiterhin können die Oberflächen von Partikeln des Lumineszenzstoffes mit Deodetominen oder anderen Haftsubstanzen modifiziert werden, um die Suspendierungseigenschaften z.B. in organischen Flüssigkeiten, wie etwa Ölen, Benzinen, Flüssiggasen etc., in wässrigen Flüssigkeiten, wie etwa Körperflüssigkeiten, in wässrig-organischen Flüssigkeitssystemen und fließfähigen Pulvern, wie etwa Tonern, zu verbessern. Je kleiner die Partikel sind, desto geringer ist ihre Neigung zur Sedimentation. Durch intensives Mahlen kann z.B. die Partikelgröße soweit, z.B. auf < 10 nm verringert werden, so dass auch ohne Zusatz von Haftsubstanzen eine stabile Suspension der Partikel in Flüssigkeiten erreicht wird.

Eine Fälschungssicherheit der Markierung ist dadurch gegeben, dass die für den jeweiligen Lumineszenzstoff charakteristischen Emissionslinien eine kryptografischen Schlüssel darstellen, die mit einem an den jeweiligen Stoff angepassten Detektor, d.h. dem Schloss, nachgewiesen werden können. Durch die Verwendung der Gemenge und Zusammensetzungen ist eine Analyse der eingesetzten lumineszierenden Zusammensetzungen erschwert oder annähernd unmöglich, so dass ein Nacharbeiten der Fälschungssicherung verhindert wird.

Der Nachweis des Vorhandenseins des Lumineszenzstoffes kann durch Bestrahlung mit einer Wellenlänge im Infrarotbereich, insbesondere mit IR-monokohärentem Laserlicht oder mit einer IR-Leuchtdiode mit Wellenlängen zwischen etwa 850 und 1500 nm, vorzugsweise zwischen etwa 920 und 1000 nm, besonders bevorzugt zwischen etwa 950-1000 nm, am meisten bevorzugt zwischen 975 und 985 nm erfolgen, wobei der Lumineszenzstoff angeregt und die Emissionsstrahlung im Bereich von für den jeweiligen Lumineszenzstoff charakteristischen Wellenlängen, etwa im Bereich zwischen 300 und 1700 nm, nachgewiesen wird. Die Bestrahlung erfolgt vorzugsweise mit einer Leistung von 1-200 mW, insbesondere 10-80 mW. Die Bestrahlung des den Lumineszenzstoff enthaltenden Produkts kann direkt oder mit einem Lichtwellenleiter oder einem anderen optisch relevanten Transfermedium, z.B. einem optischen Feststoffkörper, einem Fluid, Gas etc., erfolgen. Die Detektion kann visuell oder mittels Detektoren erfolgen.

Es können beispielsweise Lichtwellenleiter verwendet werden, deren Köpfe als Sammellinse geschliffen sind, so dass eingestrahltes Licht (IR-Licht) und vom Lumineszenzstoff emittiertes Licht (spezifisches Emissionsspektrum) eine Einheit bilden und im gleichen Punkt fokussiert sein können. Ein Vorteil dabei ist, dass keine mechanische Dejustierung zwischen Empfänger und Sender erfolgen kann. Der Dämpfungsfaktor des Lichtwellenleiters, z.B. aus Glas oder Kunststoff, kann variieren, wobei der Übergang von den optischen Bauelementen (Strahlungsquelle bzw. Detektionselement) zum Lichtwellenleiter kovisionsarm angebracht ist. Die Länge des Lichtwellenleiters kann variieren und liegt typischerweise zwischen 1 cm und 50 cm.

In einer Ausführungsform wird ein Lumineszenzstoff mit einem charakteristischen Emissionsspektrum durch ein an dieses Emissionsspektrum angepasstes Auslesesystem nachgewiesen. Das Auslesesystem enthält eine Strahlenquelle, vorzugsweise eine Strahlenquelle im IR-Bereich, und ein oder mehrere optische Detektionselemente, die für den selektiven Nachweis von spezifischen Emissionslinien des Lumineszenzstoffs, z.B. hinsichtlich der Wellenlänge und/oder Intensität, vorgesehen sind. Die Detektionselemente können beispielsweise Dioden, Fotoelemente oder elektronische Detektoren sein. Vorzugsweise werden Detektormatrices mit mehreren, vorzugsweise unterschiedlich eingestellten Detektoren verwendet, z.B. Dioden-, Fotoelemente- oder CCD-Matrices. Die Detektoren bzw. einzelne Detektoren der Detektormatrix können mit optischen Filtern, z.B. Bandpassfiltern, kombiniert werden, die auch auf das Detektionselement aufgedampft sein können. Die Filter werden vorzugsweise so gewählt, dass sie nur den Durchtritt von Licht in einem bestimmten Wellenlängenbereich, z.B. einem Bereich von 5-15 nm, vorzugsweise etwa 10 nm, ermöglichen. Die Filter enthalten vorzugsweise hoch- und niederbrechende Schichten, wie TiO₂ und SiO₂. Dadurch ist gewährleistet, dass Bandpassfilter mit sehr geringen Rise-Fall Flanken pro optischem Element bereitgestellt werden. Der Durchtritt von Licht, das nicht der für den Lumineszenzstoff charakteristischen Wellenlänge entspricht, wird verhindert.

Durch Verwendung von Detektoren bzw. Detektormatrices, die mehrere Emissionslinien unterschiedlicher Wellenlänge, z.B. 2, 3, 4 oder mehr Emissionslinien, nachweisen, die für einen jeweiligen Lumineszenzstoff charakteristisch sind, kann ein Verifikationssystem mit hohem Sicherheitsgrad bereitgestellt werden. Gegebenenfalls kann das Auslesesystem auch Detektoren enthalten, die bei Wellenlängen arbeiten, bei denen keine Emissionslinie liegt, und somit als negative Kontrolle dienen.

Das Auslesesystem kann außerdem gegebenenfalls eine programmierbare elektronische Einheit enthalten, die sich nach Bedarf auf jeweils andere Emissionslinien umprogrammieren lässt.

Ferner können mehrere unterschiedliche Lumineszenzstoffe auf einen Gegenstand, z.B. ein Produkt oder einen Träger, aufgebracht werden, die entweder visuell mit unterschiedlichen Farben und/oder durch Detektoren ausgewertet werden können. Dabei können diese unterschiedlichen Applikationen unter-, über- oder nebeneinander angeordnet sein, so dass ein komplexes und charakteristisches Muster ergeben. So werden beispielsweise bei Aufbringen zweier verschiedener Lumineszenzstoffe auf einem Produkt nebeneinander bei Bestrahlung mit einer geeigneten IR-Quelle zwei verschiedene Farben emittiert, wobei man einen Flip-Flop-Effekt erhält.

Die Gemenge können auch mit anderen Verifikationssystemen, z.B. basierend auf Bakteriorhodopsin oder spezifischen DNA-Sequenzen kombiniert werden.

In den beigefügten Figuren sind die Lumineszenzen von mit unterschiedlichen Verfahren hergestellten lumineszierenden Zusammensetzungen dargestellt. Dabei zeigt:
- Figur 1:: die Lumineszenz einer Zusammensetzung, die nach einem herkömmlichen Verfahren hergestellt wurde, und
- Figur 2:: die Lumineszenz einer Zusammensetzung, die nach einem hier beschriebenen Verfahren hergestellt wurde.

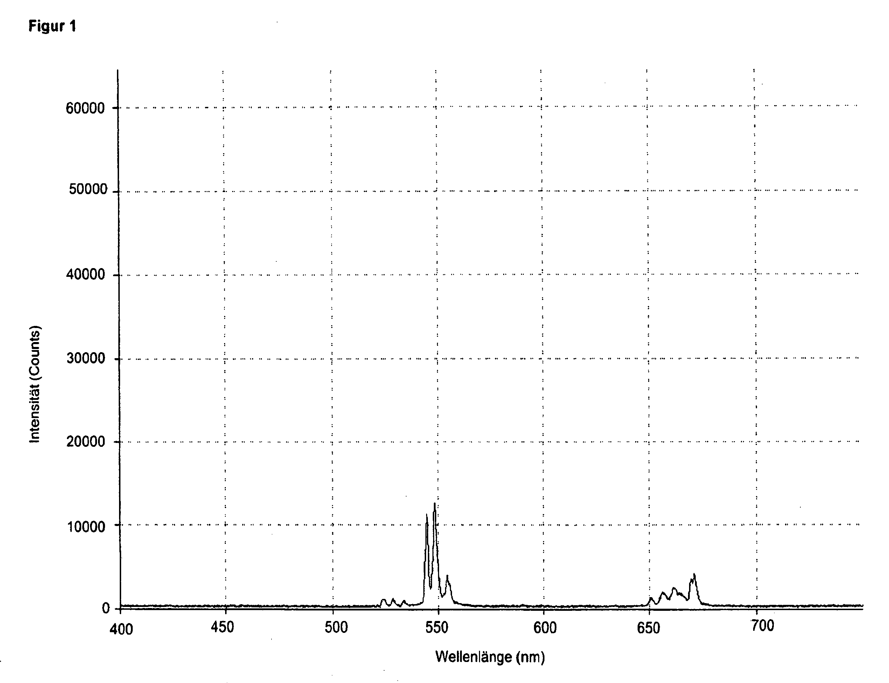

In Figur 1 beträgt die Lumineszenz der lumineszierenden Zusammensetzung, die nach einem herkömmlichen Verfahren hergestellt wurde, in einem Wellenlängenbereich von 400 nm bis 800 nm maximal ca. 12.000 Counts.

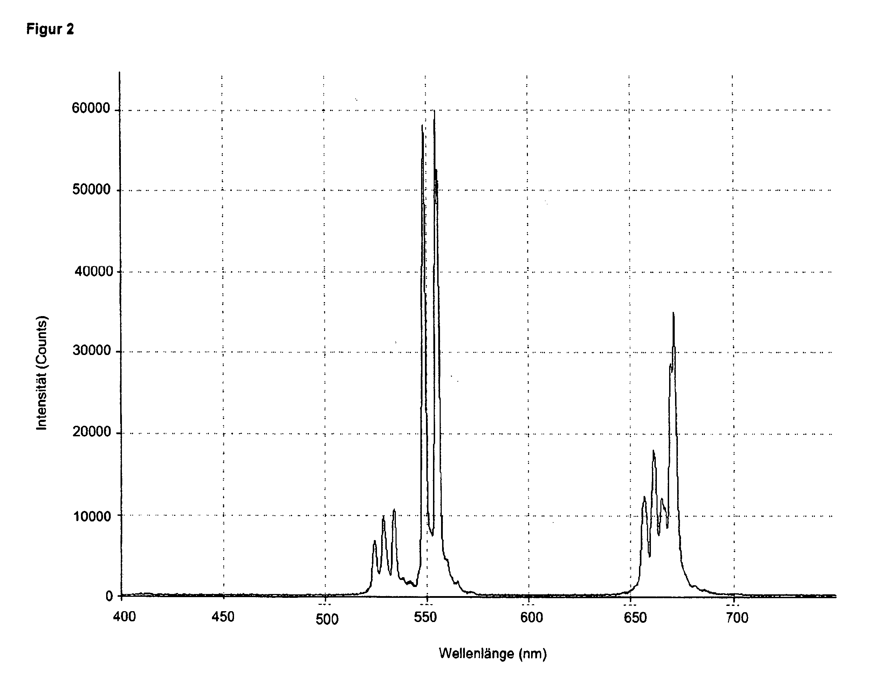

In Figur 2 ist die Lumineszenz einer lumineszierenden Zusammensetzung dargestellt, die in ihrer Stöchiometrie und in der Art der Herstellung der Zusammensetzung aus Figur 1 weitestgehend entspricht, mit Ausnahme der Tatsache, dass bei der Herstellung der Zusammensetzung vor dem Sintern eine Zugabe von Kaliumfluorid in Kombination mit einem Alkalicarbonat erfolgte. Es zeigt sich, dass die maximale Lumineszenz der so hergestellten Zusammensetzung in dem Wellenlängenbereich von 400 nm bis 800 nm ca. 60.000 Counts und damit etwa das fünffache im Vergleich zu der nach dem herkömmlichen Verfahren hergestellten Zusammensetzung beträgt.

Die Messung der Lumineszenz erfolgte in beiden Fällen mit dem Gerät Ocean Optics SpectraSuite mit jeweils einer Integrationszeit von 7 Millisekunden und bei der gleichen Anregungsintensität und -wellenlänge. Für die Messung wurden jeweils gleiche Mengen der Zusammensetzungen eingesetzt.

## Patentansprüche

1. Verwendung eines Gemenges aus mindestens einer lumineszierenden Zusammensetzung und mindestens einer im Wesentlichen nicht lumineszierenden Substanz, wobei die lumineszierende Zusammensetzung einen Mischkristall von anorganischen Salzen umfasst und die mindestens eine im Wesentlichen nicht lumineszierende Substanz ein anorganisches Salz oder ein Mischkristall aus anorganischen Salzen ist, zur Markierung von Gegenständen, Stoffen oder Stoffgemischen, wobei das Gemenge auf den Gegenstand, den Stoff oder das Stoffgemisch aufgebracht oder in ihn/es eingebracht wird, wobei vorzugsweise das Gemenge oder die Zusammensetzung als Mischung oder als Muster auf den Gegenstand, den Stoff oder das Stoffgemisch aufgebracht oder in ihn/es eingebracht wird, **dadurch gekennzeichnet, dass** die mindestens eine im Wesentlichen nicht lumineszierende Substanz ausgewählt ist unter Oxiden, Sulfiden, Fluoriden, Oxidsulfiden, Oxidfluoriden und Oxidsulfidfluoriden von Yttrium, Lanthan, Holmium, Erbium, Thulium, Ytterbium, Calcium, Zink und Titan.

2. Gegenstand, Stoff oder Stoffgemisch, der/das mit einem Gemenge aus mindestens einer lumineszierenden Zusammensetzung und mindestens einer im Wesentlichen nicht lumineszierenden Substanz, wobei die lumineszierende Zusammensetzung einen Mischkristall von anorganischen Salzen umfasst und die mindestens eine im Wesentlichen nicht lumineszierende Substanz ein anorganisches Salz oder ein Mischkristall aus anorganischen Salzen ist, markiert ist, wobei die mindestens eine im Wesentlichen nicht lumineszierende Substanz ausgewählt ist unter Oxiden, Sulfiden, Fluoriden, Oxidsulfiden, Oxidfluoriden und Oxidsulfidfluoriden von Yttrium, Lanthan, Holmium, Erbium, Thulium, Ytterbium, Calcium, Zink und Titan.

3. Verwendung gemäß Anspruch 1 oder Gegenstand, Stoff oder Stoffgemisch nach Anspruch 2, **dadurch gekennzeichnet, dass** die mindestens eine lumineszierende Zusammensetzung des Gemenges einen Mischkristall aus mindestens zwei Salzen, bevorzugt aus mindestens drei Salzen, umfasst, ausgewählt unter Oxiden, Oxidsulfiden, Oxidfluoriden und Oxidsulfidfluoriden von Yttrium, Lanthan, Cer, Praseodym, Neodym, Samarium, Europium, Gadolinium, Terbium, Dysprosium, Holmium, Erbium, Thulium, Ytterbium und Lutetium, wobei mindestens ein Salz Lanthan und/oder Yttrium enthält, wobei vorzugsweise das bzw. die nicht Lanthan und/oder Yttrium enthaltende(n) Salz bzw. Salze ausgewählt sind aus Ytterbium und mindestens einem Element ausgewählt unter Erbium, Holmium und Thulium.

4. Verwendung nach Anspruch 1 oder 3 oder Gegenstand, Stoff oder Stoffgemisch nach Anspruch 2 oder 3, **dadurch gekennzeichnet, dass** die mindestens eine lumineszierende Zusammensetzung des Gemenges aus einem Mischkristall aus anorganischen Salzen mit mindestens einem Dotierstoff besteht, wobei vorzugsweise der mindestens eine Dotierstoff ausgewählt ist unter Oxiden und Fluoriden von Haupt- und Nebengruppenelementen und besonders bevorzugt der mindestens eine Dotierstoff ausgewählt ist unter Oxiden und Fluoriden von Alkalimetallen, Erdalkalimetallen und Nebengruppenelementen, bevorzugt unter Oxiden und Fluoriden von Calcium, Zink und Titan.

5. Verwendung nach einem der Ansprüche 1, 3 oder 4 oder Gegenstand, Stoff oder Stoffgemisch nach einem der Ansprüche 2 bis 4, **dadurch gekennzeichnet, dass** die lumineszierenden Zusammensetzung, die allgemeine Formel (I) aufweist:
G_{q}L_{1-q} (I),
wobei
q eine Zahl zwischen 0 und 1 ist, bevorzugt zwischen 0,8 und 1, besonders bevorzugt zwischen 0,9 und 1, ist, und
G die folgende Formel (II) aufweist:
Y₂₋ₓLaₓO_{3-y-z}S_{y}F_{2z} (II),
wobei
x = 0 bis 2,
y = 0 bis 1, bevorzugt y ∼ 0 oder ∼ 1,
z = 0 bis 0,25, bevorzugt z = 0,001 bis 0,1, ist,
und
L ausgewählt ist unter zwei oder mehreren Komponenten der folgenden Formel (III):
M'_{c}M"_{2-c}O_{3-a-b}SₐF_{2b} (III),
wobei
c = 0 bis 2,
a = 0 bis 1, bevorzugt a ∼ 0 oder ∼ 1,
b = 0 bis 0,25, bevorzugt b = 0,001 bis 0,1, ist
und
M' und M" jeweils unabhängig voneinander ausgewählt sind, aus der Gruppe bestehend aus den dreiwertigen Kationen von Cer, Praseodym, Neodym, Samarium, Europium, Gadolinium, Terbium, Dysprosium, Holmium, Erbium, Thulium, Ytterbium und Lutetium, wobei für jede Komponente in L die Variablen M' und M" für unterschiedliche dreiwertige Kationen stehen,
wobei in der Zusammensetzung gemäß Formel (I) a = y und b = z ist.

## Claims

1. Use of a mixture comprising at least one luminescent composition and at least one substantially non-luminescent substance, wherein the luminescent composition includes a mixed crystal of inorganic salts and the at least one substantially non-luminescent substance is an inorganic salt or a mixed crystal of inorganic salts, for marking articles, compounds or mixes of compounds, wherein the mixture is applied to or introduced into the article, the compound or the mix of compounds, wherein preferably the mixture or the composition is applied to or introduced into the article, compound or the mix of compounds in the form of a blend or a pattern, **characterized in that** the at least one substantially non-luminescent substance is selected from oxides, sulfides, fluorides, oxide sulfides, oxide fluorides and oxide sulfide fluorides of yttrium, lanthanum, holmium, erbium, thulium, ytterbium, calcium, zinc and titanium.

2. An article, compound or mix of compounds marked with a mixture of at least one luminescent composition and at least one substantially non-luminescent substance, wherein the luminescent composition includes a mixed crystal of inorganic salts and the at least one substantially non-luminescent substance is an inorganic salt or a mixed crystal of inorganic salts, wherein the at least one substantially non-luminescent substance is selected from oxides, sulfides, fluorides, oxide sulfides, oxide fluorides and oxide sulfide fluorides of yttrium, lanthanum, holmium, erbium, thulium, ytterbium, calcium, zinc and titanium.

3. Use as set forth in claim 1 or article, compound or mix of compounds as set forth in claim 2, **characterized in that** the at least one luminescent composition of the mixture includes a mixed crystal of at least two salts, preferably of at least three salts, selected from oxides, oxide sulfides, oxide fluorides and oxide sulfide fluorides of yttrium, lanthanum, cerium, praseodymium, neodymium, samarium, europium, gadolinium, terbium, dysprosium, holmium, erbium, thulium, ytterbium and lutetium, wherein at least one salt contains lanthanum and/or yttrium, wherein preferably the salt or salts not containing lanthanum and/or yttrium are selected from ytterbium and at least one element selected from erbium, holmium and thulium.

4. Use as set forth in claim 1 or 3 or article, compound or mix of compounds as set forth in claim 2 or 3, **characterized in that** the at least one luminescent composition of the mixture consists of a mixed crystal of inorganic salts with at least one dopant, wherein preferably the at least one dopant is selected from oxides and fluorides of main and sub-group elements and particularly preferably the at least one dopant is selected from oxides and fluorides of alkali metals, alkaline earth metals and sub-group elements, preferably from oxides and fluorides of calcium, zinc and titanium.

5. Use as set forth in one of claims 1, 3 or 4 or article, compound or mix of compounds as set forth in one of claims 2 to 4, **characterized in that** the luminescent composition is of the general formula (I):
G_{q}L_{1-q} (I),
wherein
q is a number between 0 and 1, preferably between 0.8 and 1, particularly preferably between 0.9 and 1, and
G is of the following formula (II):
Y₂₋ₓLaₓO_{3-y-z}S_{y}F_{2z} (II),
wherein
x = 0 to 2,
y = 0 to 1, preferably y - 0 or ∼ 1,
z = 0 to 0.25, preferably z = 0.001 to 0.1,
and
L is selected from two or more components of the following formula (III):
M'_{c}M"_{2-c}O_{3-a-b}SₐF_{2b} (III),
wherein
c = 0 to 2,
a = 0 to 1, preferably a ∼ 0 or ∼ 1,
b = 0 to 0.25, preferably b = 0.001 to 0.1,
and
M' and M" are respectively selected independently of each other from the group consisting of the trivalent cations of cerium, praseodymium, neodymium, samarium, europium, gadolinium, terbium, dysprosium, holmium, erbium, thulium, ytterbium and lutetium, wherein for each component in L the variables M' and M" stand for different trivalent cations,
wherein in the composition in accordance with formula (I) a = y and b = z.

## Revendications

1. Utilisation d'un mélange d'au moins une composition luminescente et d'au moins une substance pour l'essentiel non luminescente, la composition luminescente comprenant une solution solide de sels inorganiques, et la substance pour l'essentiel non luminescente, au moins au nombre de une, étant un sel inorganique ou une solution solide de sels inorganiques, pour le marquage d'objets, de substances ou de mélanges de substances, le mélange étant appliqué sur l'objet, la substance ou le mélange de substances, ou étant incorporé dans ceux-ci, le mélange ou la composition étant de préférence appliqué sous la forme d'un mélange ou d'un motif sur l'objet, la substance ou le mélange de substances, ou étant incorporé dans ceux-ci, **caractérisée en ce que** la substance pour l'essentiel non luminescente, au moins au nombre de une, est choisie parmi les oxydes, les sulfures, les fluorures, les oxysulfures, les oxyfluorures et les oxysulfofluorures d'yttrium, de lanthane, d'holmium, d'erbium, de thulium, d'ytterbium, de calcium, de zinc et de titane.

2. Objet, substance ou mélange de substances qui est marqué avec un mélange d'au moins une composition luminescente et d'au moins une substance pour l'essentiel non luminescente, la composition luminescente comprenant une solution solide de sels inorganiques, et la substance pour l'essentiel non luminescente, au moins au nombre de une, étant un sel inorganique ou une solution solide de sels inorganiques, la substance pour l'essentiel non luminescente, au moins au nombre de une, étant choisie parmi les oxydes, les sulfures, les fluorures, les oxysulfures, les oxyfluorures et les oxysulfofluorures d'yttrium, de lanthane, d'holmium, d'erbium, de thulium, d'ytterbium, de calcium, de zinc et de titane.

3. Utilisation selon la revendication 1 ou objet, substance ou mélange de substances selon la revendication 2, caractérisé(e) en ce que la composition luminescente du mélange, au moins au nombre de une, comprend une solution solide d'au moins deux sels, de préférence d'au moins trois sels, choisis parmi les oxydes, les oxysulfures, les oxyfluorures et les oxysulfofluorures d'yttrium, de lanthane, de cérium, de praséodyme, de néodyme, de samarium, d'europium, de gadolinium, de terbium, de dysprosium, d'holmium, d'erbium, de thulium, d'ytterbium et de lutétium, où au moins un sel contient du lanthane et/ou de l'yttrium, le ou les sels ne contenant pas de lanthane et/ou d'yttrium étant de préférence choisis parmi l'ytterbium et au moins un élément choisi parmi l'erbium, le holmium et le thulium.

4. Utilisation selon la revendication 1 ou 3, ou objet, substance ou mélange de substances selon la revendication 2 ou 3, caractérisé(e) en ce que la composition luminescente du mélange, au moins au nombre de une, est constituée par une solution solide de sels inorganiques avec au moins une substance dopante, où la substance dopante, au moins au nombre de une, est de préférence choisie parmi les oxydes et fluorures d'éléments du groupe principal et des groupes secondaires, et la substance dopante, au moins au nombre de une, est d'une manière particulièrement préférée choisie parmi les oxydes et fluorures de métaux alcalins, de métaux alcalino-terreux et d'éléments des groupes secondaires, de préférence parmi les oxydes et fluorures de calcium, de zinc et de titane.

5. Utilisation selon l'une des revendications 1, 3 ou 4 ou objet, substance ou mélange de substances selon l'une des revendications 2 à 4, caractérisé(e) en ce que la composition luminescente présente la formule générale (I) :
G_{q}L_{1-q} (I)
dans laquelle
q est un nombre compris entre 0 et 1, de préférence entre 0,8 et 1, d'une manière particulièrement préférée entre 0,9 et 1, et
G a la formule (II) ci-après :
Y₂₋ₓLaₓO_{3-y-z}S_{y}F_{2z} (II)
dans laquelle
x vaut 0 à 2,
y vaut 0 à 1, de préférence y ∼ 0 ou ∼ 1,
z vaut 0 à 0,25, de préférence z = 0,001 à 0,1, et
L est choisi parmi deux composants ou plus de formule générale (III) :
M'_{c}M"_{2-c}O_{3-a-b}SₐF_{2b} (III)
dans laquelle
c vaut 0 à 2,
a vaut 0 ou 1, de préférence a ∼ 0 ou a ∼ 1,
b vaut 0 à 0,25, de préférence b = 0,001 à 0,1,
et
M' et M" sont chacun indépendamment l'un de l'autre choisis dans le groupe composé des cations trivalents du cérium, du praséodyme, du néodyme, du samarium, de l'europium, du gadolinium, du terbium, du dysprosium, du holmium, de l'erbium, du thulium, de l'ytterbium et du lutétium, les variables M' et M" représentant pour chaque composant de L des cations trivalents différents,
où, dans la composition de formule (I), a = y et b = z.
